# EUROPEAN PATENT APPLICATION

(11) **EP 2 573 487 A1**
(43) Date of publication of application: **27.03.2013**
(21) Application number: 12183072.3
(22) Date of filing: 05.09.2012
(51) Int. Cl.: F24J 2/52, H01L 31/042, F24J 2/00

(54) **Supporting structure for photovoltaic panels**

(30) Priority: 22.09.2011 IT BS20110053 U
(71) Applicant: Designeering S.r.l., 36053 Gambellara (VI) (IT)
(72) Inventor: BESCHI, Mosè Silvano, 36053 Gambellara (VI) (IT)
(74) Representative: Pes, Matteo

(57) **Abstract**

A photovoltaic panel (1) is described, particularly for roofs, comprising a supporting structure (2) and one or more photovoltaic modules (3) constrained to such a supporting structure and embraced perimetrically by it. The supporting structure comprises in its turn at least two parallel longitudinal posts (5, 6) and at least two crossbeams (7) orthogonally constrained to the posts; the cross section of the longitudinal posts has substantially a L or C or T shape and it is adapted to be coupled side by side and abutting against a longitudinal post of a further adjacent panel (1). The panel is intended for being constrained, by one or more fastening devices (50), to a fixed structure (70) so that the panel, once installed, will cover uniformly the building structure below and has itself a structural function as a building element.

## Description

### Field of the Invention

The present invention refers to a photovoltaic panel to be used in architectural integrations, particularly as constitutive element for building roofs or facades.

### State of the art

From a point of view, EP 2333453A1, which is in the name of the same Applicant, discloses an innovative device for operatively installing and fastening photovoltaic panels onto respective supporting frameworks, made of bars running substantially vertically or horizontally. These bars act as a rest for the photovoltaic panels in their thickness direction and they are each provided frontally with several couple of hooking slots. Basically, such a device comprises a body provided with couples of anchoring hooks paired and intended to be hooked into the hooking slots with the aid of locking means. A prismatic block is combined and fastened to the body device, defining two rest planes for the adjoining sides of two parallel panels and which is provided with means for fastening said panels on said rest planes.

From another point of view, it is now necessary and becoming popular the use of photovoltaic panels in place and substitution of building roofs or façades. The photovoltaic panels may be rigid or flexible. A photovoltaic panel is rigid when the plane of the photovoltaic cells is placed between a front clear coat and a back coat, all in a frame so as to compose a plane and not-deformable structure. A photovoltaic panel is flexible when it is made by deposition of a semiconductor material layer over a substrate which can have the shape of the rest surface.

According to a guide of innovative applications directed to an architectural integration of photovoltaic systems, photovoltaic panels must have and comply with specific characteristics.

With architectural integration it is herein intended that a photovoltaic panel is not anymore a simple power generator only, but it is a component which is integrated in building structures, particularly a building roof or roofing. A photovoltaic panel is therefore designed to be used in the same way and with the same purposes of any other conventional building component.

Then photovoltaic panels for these applications become a building product able to be architecturally integrated with no need of using further components or systems. Particularly a photovoltaic panel, in addition to the production of electric power from solar irradiation, has to assure typical functions of a building case or roof, such as: mechanical strength comparable to that of the building element to be replaced; a thermal resistance able to not decrease or impair the performances of the building case itself in which it is integrated; a water - tightness for the waterproofing of the building structure.

Basically the architectural integration of the photovoltaic system is such that, when it is operative, the removal of the photovoltaic panels may impair the function of the building structure and make it not usable.

### Objects and summary of the invention

Object of the present invention is to propose a photovoltaic panel which meets completely the requirements of architectural integration in building structures, as well as to be simple to be realized and easy to be installed, particularly as building roof.

Another object of the present invention is to provide a photovoltaic panel designed to be advantageously installed with the proven assembling device of the above mentioned EP 2333453A1.

Such following objects and advantages are obtained by a photovoltaic panel having the technical specifications contained in one or more of the attached claims, each of which taken alone (without the corresponding dependencies) or in any combination with the other claims, as well as according to the following aspects and/or exemplary embodiments, variously matched, even with the afore said claims.

Therefore the present invention relates to a photovoltaic panel according to claim 1.

Particularly the present invention concerns a photovoltaic panel comprising:
- a supporting structure;
- one or more photovoltaic modules constrained to said supporting structure and embraced perimetrically by it,
   wherein:
- the supporting structure comprises in its turn at least two parallel longitudinal posts and at least two crossbeams orthogonally constrained to said posts;
- the cross section of said longitudinal posts has substantially a L or C or T shape and it is adapted to be coupled side by side and abutting against a longitudinal post of a further adjacent panel.

In the scope of the present description and claims, with the term "photovoltaic module" is intended the single device for converting solar energy to electric power, composed of a plurality of photovoltaic cells. Instead the term "photovoltaic panel" identifies a structure comprising one or more of the afore said modules.

Preferably each of said longitudinal posts is provided with an extrados and an intrados, where the extrados is structured to be combined with said one or more photovoltaic modules of the panel, and where the intrados is structured to be coupled with the respective intrados of a longitudinal adjacent post, belonging to a further adjacent panel similar to said panel, so that the two longitudinal posts placed side by side form a longitudinal beam as a whole.

With the terms extrados and intrados it is identified, respectively, the post side facing towards the photovoltaic module and fastened thereto, and the opposite side of the post facing towards an adjacent panel which, in use, is inside the afore said longitudinal beam.

The afore described panel, composed of a supporting structure carrying one or more photovoltaic modules, is a whole and modular block and it is characterized by a high mechanical strength.

The panel of the present invention is intended for being constrained to a fixed building structure, for example to a supporting framework composed of vertical or horizontal bars, so that the panel, once installed, will cover uniformly the building below and has itself a structural function as a building element. In particular, the installation of several adjacent panels allows a whole roof or façade to be realized, which is uniform and structurally resistant.

Preferably the section of longitudinal posts extends between a bottom end, intended for being fastened to the building structure, and a top end, intended for supporting, in use and resting thereon, said one or more photovoltaic modules, so that these would be inside the building structure and hit by the solar radiation.

In a preferred embodiment of the present invention, the two longitudinal posts of a panel are fastened to the building structure, each with the respective adjacent post belonging to the respective adjacent panel, by a respective fastening device, of the type in the afore mentioned document EP 2333453A1.

Preferably the two longitudinal posts each comprise, on the intrados, one or more operative portions structured to perform a certain function of the post itself and/ or to cooperate with the adjacent post, which belongs to the adjacent panel and with which they form said longitudinal beam, to define one or more beam recess.

In an aspect, the present invention further concerns a building roof or building façade comprising a plurality of panels placed side by side and constrained one another to make a whole structure, and constrained altogether to a fixed building structure by convenient fastening means.

### Brief description of the drawings

The invention will be herein below described more in detail referring to the attached illustrative and not limitative drawings, in which:
- figure 1 shows a perspective partially exploded and partially cut-away view of a couple of adjacent panels, according to the present invention, fastened to a fixed structure;
- figure 2 shows a cross section view of a first post of the panel object of the present invention;
- figure 3 shows a cross section view of a second post of the panel object of the present invention;

- figure 4 shows a partial side view of the assemble of Figure 1;
- figure 5 shows an exploded side view of the assemble of Figures 1 and 4.

### Detailed description of the invention

In said drawings, the panel object of the invention is totally indicated with numeral 1, whereas with numeral 70 is indicated the fixed structure belonging to the building structure (not shown, for example a house or warehouse) in which the panel is architecturally integrated, and with numeral 50 the device fastening the panel to the fixed structured is indicated. It has to be observed that, in the exemplary embodiment shown in figures, the afore said fixed structure is an anchoring bar 70 which is part of a supporting framework and, as afore described, the fastening device 50 is advantageously the device described in document EP 2333453A1 for operatively installing and fastening photovoltaic panels.

The photovoltaic panel 1 comprises essentially a supporting structure 2 and one or more photovoltaic modules 3 constrained to the supporting structure and embraced perimetrically by it. The supporting structure 2 comprises in its turn at least two parallel longitudinal posts 5 and 6 and at least two crossbeams 7 orthogonally constrained to the posts.

The posts and crossbeams make a supporting structure constituting at least one panel frame; such a frame sideways surrounds the afore said one or more photovoltaic modules. In case wherein the panel comprises only one photovoltaic module, typically of rectangular or squared shape, the supporting structure comprises exactly two posts and two crossbeams, disposed on the four module sides, where the posts are fastened to the opposite sides of the module (typically the long sides) which will be fastened to the anchoring bars, whereas the crossbeams are fastened to the opposite side of the module (typically the short sides) not constrained to the anchoring bars and orthogonal thereto. In case wherein the panel comprises more photovoltaic modules, the crossbeam number increases because one in-between crossbeam is added between each couple of adjacent modules at the two ending crossbeams of the panel. For example, if the panel comprises three aligned photovoltaic modules (preferably different one from another), the supporting structure comprises two cross posts, combined sideways with the aligned modules, and four crossbeams (orthogonal to the posts) of which two at the ends, which complete the outer frame of the panel with the posts, and two in-between (inside the frame and extending between corresponding in-between points of the posts) respectively between the facing sides of the first and second module and between the facing sides of the second and third module. Then, if the panel comprises several adjacent module rows, the supporting structure would comprise such in-between posts to create a post and crossbeam grid defining a space array, each space intended to a single photovoltaic module.

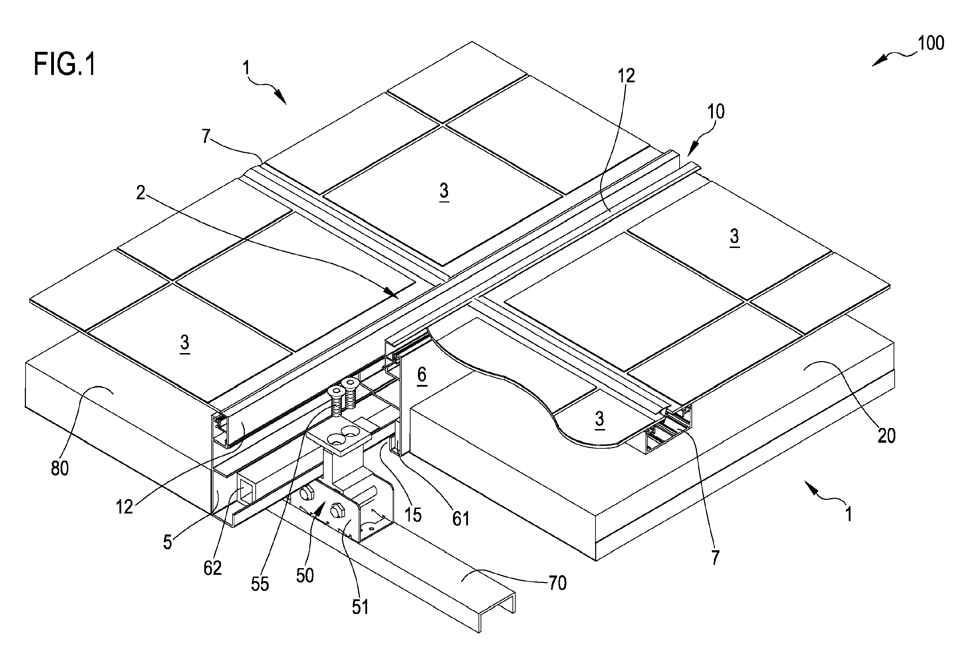

In figure 1 a portion of building roof 100 is shown, made by coupling two panels 1 object of the present invention; such panels are placed side by side and fastened one another and to the fixed structure 70. In such a figure the two side by side panels are shown, for clarity, only in part; for each it has to be mentioned a respective post (the post 5 for the left panel and the post 6 for the right panel), two photovoltaic modules 3 and a crossbeam 7 interposed and connecting the two modules and fixed to the post. The panels shown in figure 1 may comprise any number of modules 3. What is relevant is the coupling, shown in figure, between the adjacent panels at the side by side posts, where the fastening to the anchoring bars is carried out by means of the fastening devices 50.

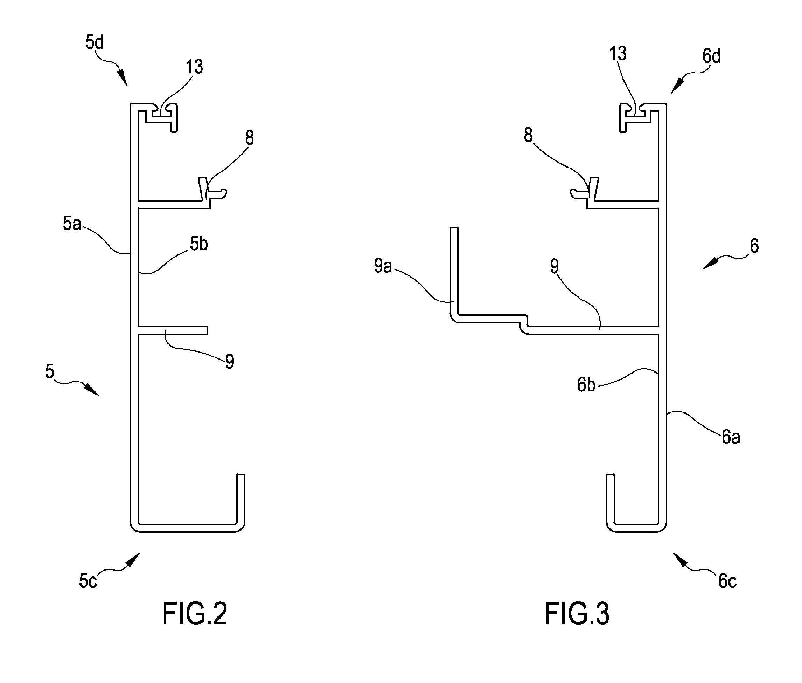

In a preferred embodiment of the present invention, the cross section of the longitudinal posts 5 and 6 is substantially L- or C or T- shaped. In particular, in figure 2 and 3 posts with a L-shaped modified section are shown, as will be explained herein below.

Preferably, the section of posts 5, 6 is adapted to be coupled side by side and in abutment against a respective longitudinal post 5, 6 of a further adjacent panel 1.

Preferably, the distance between the two successive crossbeams is at least equal to the longitudinal extent of the photovoltaic modules.

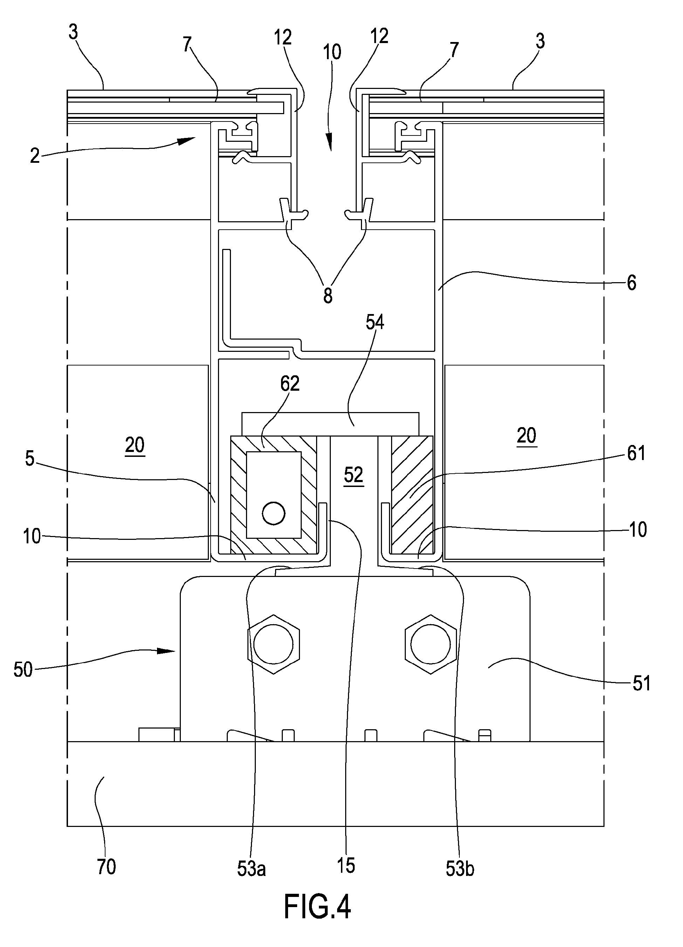

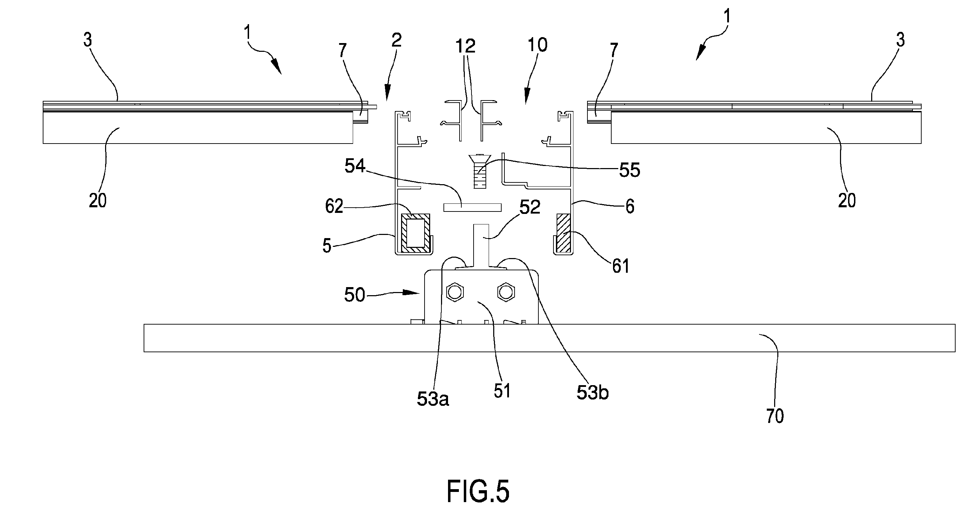

Preferably each longitudinal post 5, 6 is provided with an extrados 5a, 6a and an intrados 5b, 6b. The extrados is combined with the photovoltaic modules of the panel and the intrados is coupled to the respective intrados of the adjacent longitudinal post belonging to the adjacent panel. In this way two side by side longitudinal posts, belonging to two side by side panels, form a longitudinal beam 10 as a whole, illustrated in detail in figure 4 and 5.

The section of longitudinal posts 5 and 6 extends between a bottom end 5c, 6c, intended for being fastened to the fixed structure 70, and a top end 5d, 6d, intended for supporting, resting thereon, said one or more photovoltaic modules, so that these would be inside the building structure and hit by the solar radiation.

Preferably the two longitudinal posts each comprise, on the intrados, one or more operative portions structured to perform a certain function of the post itself and/ or to cooperate with the adjacent post, which belongs to the adjacent panel and with which they form said longitudinal beam 10, to define one or more beam recess.

In particular, the posts comprise a hooking portion 8 jutting from the intrados towards the inside of the beam and structured to allow a glass holder element to be hooked.

Preferably, the supporting structure comprises at least one glass holder element 12 for each post, placed inside the beam, structured to abut on said hooking portion and lock said one or more modules of the top end 5d, 6d of the respective post in position.

Preferably, the glass holder element is a profile having a longitudinal development parallel to the posts and a section composed of a vertical portion, ending at the bottom on the hooking portion, and two horizontal portions, protruding from the same side of the vertical portion towards the panel inside, which wrap the module rested on the top end of the post and the top end itself.

Preferably, the top end 5d, 6d of each post comprises a seat 13 for inserting a gasket interposed between the module and the top end where the module rests on the top end itself.

Preferably, the hooking portions of the posts forming a beam extend from the respective intrados towards the inside of the beam 10 so that they do not come in abutment one against the other and to leave the beam open on top. In this way the assembling and the maintenance of adjacent panels of a building roof or façade is made easier.

Preferably each post 5, 6 comprises an in-between portion 9 jutting from the intrados towards the inside of the beams and structured to cooperate with the corresponding in-between portion of the further post composing the beam to prevent the water or other extraneous material (dust, dirt, etc.) from passing from an upper end of the beam to a lower end of the beam.

In a not shown embodiment, the in-between portions may support a gasket adapted to realize a water - tightness from the top end of the beam to the bottom end of the beam.

Preferably, as shown in figures, the two in-between portions 9 of the two posts 5 and 6 of a beam are different one from another.

In particular, the in-between portion 9 of the post 6 comprises an additional portion 9a composed of a horizontal section, structured to be overlapped to assembled panels, at the in-between portion of the adjacent post 5) and of a vertical section (jutting from the end of the horizontal portion) structured to come into abutment against the intrados of the post 5.

The two in-between portions thereby define a compartment inside of the beam for the collection and the outflow of meteoric water.

In the example illustrated in figures, the bottom ends 5c and 6c of the posts correspond to the horizontally folded portions of the respective L- shaped profiles of the post themselves. These bottom ends represent the portions of the beam which is intended for being constrained to the fixed structure 70.

In a not shown embodiment, the ending portions come into abutment one against the other making a lower continuous plane of the beam which is fastened to the fixed building structure, by fastening means (for example threads, hooks, weldings). In case such a lower plane may be provided with convenient holes or notches for the passage of the fastening means to the inside of the beam.

In a preferred embodiment of the present invention, on the contrary, the bottom ends 5c, 6c are dimensioned so that to define a bottom opening 15 of the beam 10 extending longitudinally for the whole beam and adapted to allow a fastening device 50 of the beam to be inserted to the anchoring bar 70. This allows a passage inside of the beam to be provided in every point of its longitudinal extent, so that the device fastening to the beam could be combined aside from the position of the device and anchoring bar below.

It has to be observed that the two posts of a single panel may be structurally identical one to another and symmetrical to be assembled at the two opposite sides of the photovoltaic modules.

Alternatively, as shown in figures, the two posts 5 and 6 may be slightly different, for example in the extent of the bottom ends or the shape of the in-between profiles, to carry out the afore described functions. In such a case, each panel will have a post of the type referred with numeral 5 on an outer side and, on the opposite outer side, a post of the type referred with numeral 6. In the assembling step, the panels will have to be placed side by side alternately, so that the couple of posts 5-6, or similarly 6-5, would be facing one to another, to make a beam 10 correctly.

Preferably, the bottom ends 5c and 6c each comprise an ending and vertically folded portion adapted to define an abutting surface for the fastening device. Further, these ending portions define an in-between compartment inside of the beam for the passage of electric wires (not shown) so that the photovoltaic modules and the panel could operate.

In figures 1, 4 and 5 the fastening device 50 is of the type described in document EP 2333452A1; such a device comprises a body 51 fastened to the anchoring bar 70, to which a prismatic block 52 is combined with and defining two rest planes 53a, 53b of the bottom ends 5c, 6c of the posts of two facing adjacent panels (facing to form a beam 10); the prismatic block being provided with a locking plate 54 fastened over the block by means of one or more threads 55. For a detailed description of the fastening device reference is made to document EP 2333453A1, which is integrally comprised in the present description.

Preferably, as shown in figures, the panel further comprises two pressure members 62, 61 combined respectively with the post 5 and the post 6. Such pressure members each consist of a bar or profile which can be combined to the bottom end 5c, 6c of the respective post, particularly able to be inserted in the respective post compartment defined by the folding of the ending portion of the bottom end 5c, 6c. In practice, these pressure members are interposed between a locking plate 54 of the fastening device 50 and the bottom end of the respective post, so that the tightening of the plate on the pressure members causes the fastening of the posts 5 and 6 to the fastening device and, by the latter, to the anchoring bar 70. In other words, by screwing the locking plate on the prismatic block 52, the lock of the pressure members 62 and 61 on the posts 5 and 6 and the stable placement of the bottom ends 5c and 6c of the these posts abutting on the rest planes 53a, 53b, respectively, of the prismatic block 52, is caused. Such a fastening is particularly strong and, at the same time, it can be disassembled. Advantageously, each post comprises a respective pressure member, extending for the whole longitudinal length of the post itself, on which plural fastening means take hold by means of respective locking plates.

Preferably, one or more of said pressure members may have a hollow longitudinal profile for the passage of the electric wires in its inside.

In a preferred embodiment of the present invention, the afore said crossbeams 7 are composed of profiles having a U- or Ω- (omega) shaped cross section, as shown in figure 1. These crossbeams are structured to sustain and join two photovoltaic modules at the respective sides not combined with the posts. The crossbeam 7 has two distinct vertical portions, one for each of the two adjacent modules it supports, joined continuously by a horizontal portion. The crossbeam could advantageously comprise seats for the positioning of gaskets, so that the gaskets are interposed between a photovoltaic module and the top end of the vertical portion of the crossbeam where the module rests on the crossbeams itself.

Preferably, as shown in figure 1 and 4, the posts comprises one or more indentations structured to each allow the passage of a crossbeam inside the post itself. In this way the crossbeam is combined with the post and supported by the latter. Further, in case wherein the panel comprises an arrayed supporting structure, the crossbeams could pass through the posts from one side to another of the panel.

Preferably, posts and crossbeams are profiles made of aluminium and steel.

The described panel may further comprise one or more insulating panels 20, 80, under the photovoltaic modules and constrained to the supporting structure, and/ or one or more double glasses.

## Claims

1. A photovoltaic panel (1), particularly for roofs, comprising:
- a supporting structure (2);
- one or more photovoltaic modules (3) constrained to said supporting structure and embraced perimetrically by it,
wherein:
- the supporting structure comprises in its turn at least two parallel longitudinal posts (5, 6) and at least two crossbeams (7) orthogonally constrained to said posts (5, 6);
- the cross section of said longitudinal posts has substantially a L or C or T shape and it is adapted to be coupled side by side and abutting against a longitudinal post of a further adjacent panel (1).

2. Panel (1) according to claim 1, intended for being constrained, by one or more fastening devices (50), with the posts (5, 6) to a fixed structure (70) so that the panel, once installed, will cover uniformly the building below and has itself a structural function of building element.

3. Panel (1) according to any one of the preceding claims, wherein each longitudinal post (5, 6) is provided with an extrados (5a, 6a) and an intrados (5b, 6b), the extrados being combined with the photovoltaic modules of the panel and the intrados being coupled to the respective intrados of the longitudinal adjacent post belonging to the adjacent panel, so that the two longitudinal side by side posts, belonging to two side by side panels, would altogether make a longitudinal beam (10).

4. Panel (1) according to any one of the preceding claims, wherein the two longitudinal posts each comprise, on the intrados, one or more operative portions structured to perform a certain function of the post itself and/ or to cooperate with the adjacent post, which belongs to the adjacent panel and with which they form said longitudinal beam (10), to define one or more beam recess.

5. Panel (1) according to any one of the preceding claims, wherein the posts (5, 6) comprise a hooking portion (8) jutting from the intrados towards the inside of the beam and structured to allow a glass holder element to the hooked and wherein the supporting structure comprises for each post at least one glass holder element (12) which is positioned inside the beam, structured to abut onto said hooking portion (8) and lock said one or more modules of the top end (5d, 6d) of the respective post in position and wherein the glass holder element (12) is a profile having a longitudinal development parallel to the posts and has a section composed of a vertical portion, ending on the bottom on the hooking portion, and of two horizontal portions, protruding from the same side of the vertical portion towards the panel inside, which wrap the module rested on the top end of the post and the top end itself.

6. Panel (1) according to any one of the claims 4 to 5, wherein the top end (5d, 6d) of each post comprises a seat (13) for inserting a gasket so that the latter is interposed between the module (3) and the top end where the module rests on the top end itself.

7. Panel (1) according to any one of the preceding claims, wherein each post (5, 6) comprises an in-between portion (9) jutting from the intrados towards the beam inside and structured to cooperate with the corresponding in-between portion of the further post composing the beam to prevent the water or other extraneous material from passing from an upper end of the beam to a lower end of the beam.

8. Panel (1) according to claim 7, wherein the in-between portion (9) of the post (6) comprises an additional portion (9a) composed of a horizontal section, structured to be overlapped, as panels are assembled, at the in-between portion of the adjacent post (5), and of a vertical section structured to come into abutment against the intrados of the post (5), the two in-between portions thereby defining a compartment inside of the beam for the collection and the outflow of meteoric water.

9. Panel (1) according to any one of the preceding claims, wherein the bottom ends (5c, 6c) of the posts correspond to the horizontally - folded portions of the respective L-shaped profiles of the posts themselves, where these bottom ends represent the beam portion intended for being constrained to the fixed structure (70).

10. Panel (1) according to any one of the preceding claims, wherein the bottom ends (5c, 6c) are dimensioned so that to define a bottom opening (15) of the beam (10) extending longitudinally for the whole beam and adapted to allow a fastening device (50) of the beam to be inserted to the anchoring bar (70).

11. Panel (1) according to any one of the preceding claims, comprising two pressure members (62, 61) each combined with a respective post (5, 6) and consisting of a bar or profile which can be combined to the bottom end (5c, 6c) of the respective post, said pressure members being intended for being interposed between a locking plate (54) of the fastening device (50) and the bottom end of the respective post, so that the tightening of the plate on the pressure members causes the fastening of the posts (5, 6) to the fastening device and, by the latter, to the anchoring means (70), wherein said pressure members (62, 61) extend for the whole longitudinal length of the respective post (5, 6) so that plural fastening means (50) take hold on them by means of respective locking plates.

12. Panel (1) according to any one of the preceding claims, wherein the posts comprise one or more indentations structured to each allow the passage of a crossbeam inside the post itself, so that the crossbeam is combined with the post and supported by the latter and/ or it could pass through the posts from one side to another of the panel.

13. Panel (1) according to any one of the preceding claims comprising one or more insulating panels (20, 80), under the photovoltaic modules and constrained to the supporting structure, and/ or one or more double glasses.

14. Building roof (100) or building wall comprising a plurality of panels (1) according to any one of the claims 1 to 13 placed side by side and constrained one to another to make a whole structure, and constrained altogether to a fixed structure (70) by convenient fastening means (50).

15. Roof (100) according to claim 14, wherein each fastening means (50) comprises a body (51), fastened to the anchoring bar (70), to which a prismatic block (52) is combined with and defining two rest planes (53a, 53b) intended for housing, in a resting position, the bottom ends (5c, 6c) of the posts of two facing adjacent panels (1) to form a beam (10), the prismatic block being provided with a locking plate (54) fastened over the block by means of one or more threads (55).
